# EUROPEAN PATENT APPLICATION

(11) **EP 1 452 279 A1**
(43) Date of publication of application: **01.09.2004**
(21) Application number: 04003223.7
(22) Date of filing: 13.02.2004
(51) Int. Cl.: B25J 19/00

(54) **Industrial robot with a signal cable including optical fiber conductors**

(30) Priority: 27.02.2003 IT TO20030139
(71) Applicant: COMAU S.p.A., 10095 Grugliasco (Torino) (IT)
(72) Inventor: Angela, Roberto, 10139 Torino (IT)
(74) Representative: Gallarotti, Franco

(57) **Abstract**

An industrial robot (1) has a structure comprising two or more reciprocally articulated elements (2, 3, 5, 7, 10) capable of angular motion, an electronic unit (14) for controlling a functional device (13) carried by the frame of the robot (1), and at least a first optical fiber conductor (15). The electronic unit (14) is in signal communication with the functional device (13) through the first optical fiber conductor (15) for the transmission of control signals, and the first optical fiber conductor (15) is part of a signal cable (16) inserted into a tube (17); the outer section of the signal cable (16) is smaller than the inner section of the tube (17), so that the former one can move within the latter.

## Description

The present invention relates to industrial robots with a frame comprising two or more reciprocally linked elements with possible angular motion, an electronic unit for controlling a functional device supported by the robot frame, and an optical fiber conductor.

As is generally known, some types of industrial robots should be able to execute complex movements, and to this purpose their frame comprises several elements linked one to the other with widely possible motion (the most widespread robot frame has at least six joints); to every shift of a tool corresponds a movement of one or more elements of the robot frame according to a corresponding rotation axis.

Power supply for functional elements of the robot usually takes place through electric cables equipped with metal conductors and/or with pneumatic or hydraulic tubes; said electric cables and tubes are suitably guided as a bundle along the robot frame, for instance by means of core hitches, and can tolerate well mechanical stresses occurring during the single movements.

The use of optical fiber conductors for the exchange of control signals between a functional device of the robot and its control unit has been regarded as unadvisable until today, due to the fact that during its lifetime an industrial robot executes hundreds of thousands of single movements.

In the past optical fibers were suggested as power supply means for laser welding torches carried by robots. The optical fiber used for said application has a considerable section and therefore a robust structure, which can tolerate mechanical stresses, if present, due to movements executed by the welding torch.

Conversely, in case of conductors for exchanging control signals, i.e. not for power supply, optical fiber section should be relatively small, for obvious reasons involving costs and wiring convenience. If on one hand an optical fiber conductor with a small section is well suitable for use in basically stationary conditions, however until today its intrinsic fragility has advised against its use in conditions involving repeated mechanical stresses. Indeed, in the specific case of application in an industrial robot, an optical fiber conductor with a small section would undergo repeated mechanical stresses on the bends along the moving frame of the robot, torsions on joints, frictions and, if possible, tractions; this would dramatically reduce the lifetime of the optical fiber conductor and would negatively affect the quality of transmission of digital or binary signals (which problem, conversely, is absent in case of mere power supply to a laser welding torch).

The present invention mainly aims at solving this drawback and at manufacturing an industrial robot as referred to above, in which optical fiber signal conductors can be used efficiently and safely.

In view of achieving said aim, the object of the invention is an industrial robot having all the characteristics referred to above and further characterized in that the electronic unit is in signal communication with the functional device through the optical fiber conductor, in order to transmit control signals, and in that the optical fiber conductor is part of a flexible cable extending within a tube, the outer section of the cable being smaller than the inner section of the tube, so that the former can move within the latter. Thus the tube, which is uninterrupted, beyond acting as a guiding and shielding element for the signal transmission cable, enables to prevent too small bending radiuses from being applied to the optical fiber conductor; moreover, possible angular movements of robot components result in torsions located only on the tube, whereas torsion efforts on the optical fiber conductor can be uniformly distributed on the whole length of the cable portion inserted into the tube.

The preferred characteristics of the invention are listed in the appended claims, which are regarded as an integral and substantial part of the present invention.

Further characteristics and advantages of the invention will be evident from the following description with reference to the accompanying drawings, provided as a mere non-limiting example, in which:
- Figure 1 is a schematic view of a preferred embodiment of an industrial robot according to the invention,
- Figure 2 is a perspective view of a portion of an optical fiber cable for the transmission of control signal, which the robot of Figure 1 is equipped with, within a shielding and guiding tube,
- Figure 3 is a schematic view of a typical operating position of the cable of Figure 2 within its shielding and guiding tube,
- Figures 4 and 5 are perspective views of portions of an optical fiber cable for the transmission of control signals according to possible variants of the invention, and
- Figure 6 is a schematic view of an execution variant of the industrial robot according to the invention.

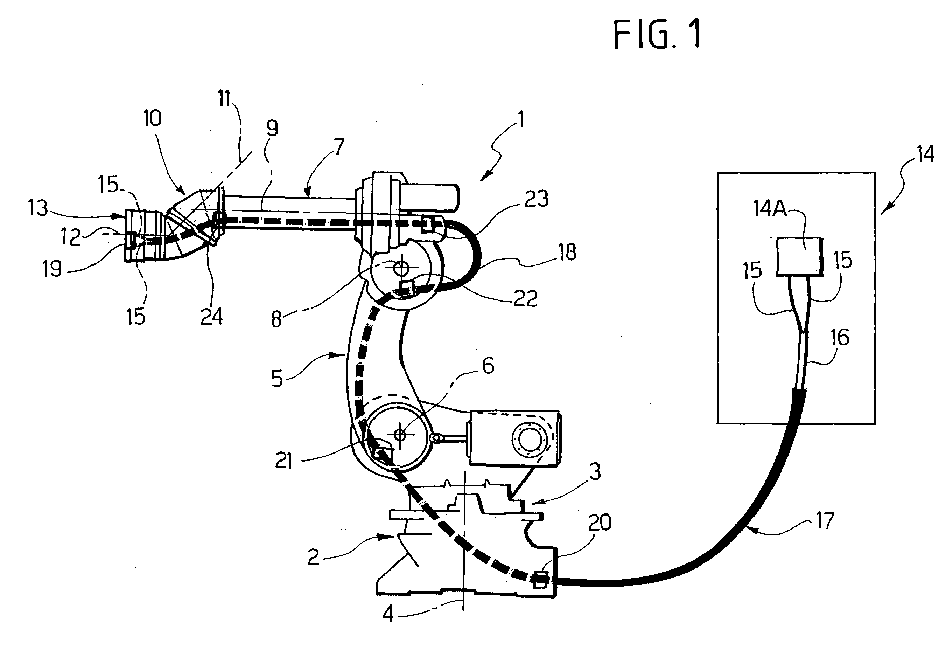

In figure 1 number 1 globally refers to an industrial robot comprising a base 2 and a pillar 3 mounted onto the base 2 to turn around a first axis 4 which is in vertical direction. Number 5 refers to an arm mounted onto the support frame consisting of the pillar 3, for swinging around a second axis 6 which is in horizontal direction. Number 7 refers to a forearm mounted onto the arm 5 around a third axis 8, which is again in horizontal direction; said forearm 7 can further turn around its own axis 9, which is therefore a fourth motion axis of the robot 1 and is equipped on its end with a wrist device 10. In the preferred embodiment of the invention, the element 10 is a hollow wrist of the kind as described in EP-A-0 873 826, whose teachings on this point are here incorporated by reference; in said light, the device 10 comprises a first part associated to the end of the forearm 7, a middle part associated to the first part and turning around a corresponding axis 11, and an end part associated to the middle part and turning around a corresponding axis 12. A generic tool, schematically referred to with number 13, is associated to the end part of the wrist element 10.

According to a technique known per se, the motion of each of the moving parts 3, 5, 7 and 10 of the robot 1 is controlled by a corresponding electric motor (not shown) equipped with its gear down drive (not shown either). Power supply for the aforesaid electric motors for moving the robot 1 and for the tool 13 is provided through usual electric cables having metal conductors, not shown in the figures for reasons of clarity, which extend as a bundle along the robot frame.

The movements of the robot 1 and the operations carried out by the tool 13 are controlled by an electronic control unit, schematically referred to with number 14 in Figure 1, placed in a remote position with respect to the robot 1.

In the case of the present invention, the tool 13 is designed to receive, beyond the required electric power supply, also digital or binary control signals from the unit 14, and if necessary to exchange information of the same type with the latter.

The transmission medium for exchanging signals between the tool 13 and the control unit 14 consists of optical fiber conductors, two of which are referred to with number 15 in Figure 1. The conductors 15 can be made of plastic or glass fiber according to a known technique. Also the logic for the transmission/reception of data exchanged by means of the conductors 15 is known per se and falls outside the aims of the present invention.

In the case shown by way of example, the two optical fiber conductors 15 are part of a same flexible cable 16, which is guided by means of a corresponding shielding tube 17. Moreover, in the embodiment shown by way of example in Figure 1, a substantial part of the longitudinal development of the tube 17 extends within the frame of the robot 1, whose various components 2, 3, 5, 7 and 10 are hollow inside.

The tube 17 is made of an elastic or flexible material, though having a high resistance to flattening and to excessive flexions. A preferred material is in particular polyurethane; in said light it should be pointed out that the tube 17 can be exactly the same as tubes commonly used for carrying compressed air for the supply of pneumatic actuators on robot.

In the case shown by way of example in Figure 1, the tube 17 extends from inside the base 2 through the upright 3 and the arm 5; a portion of the tube 17 then gets out of the body of the arm 5 in a terminal area of the latter, so as to form a loop 18 and then get into the forearm 7; the tube 17 extends within the forearm 7 and then gets through the hollow wrist 10, until it ends on an interface zone 19 to the tool 13, to which the two conductors 15 of the cable 16 are connected in a known way. On the other end of the cable 16 the conductors 15 are connected to a processing unit 14A of the control unit 14.

Suitable constraint means of the tube 17 are provided for at least within the components 2, 3, 5 and 7, schematically referred to with number 20-24, for instance in the form of core hitches or ring-shaped stationary elements. In a possible implementation of the invention, said constraint means 20-24 are the same used for positioning and guiding other various electric cables and, if present, pneumatic/hydraulic pipes, designed to grant power supply to motors and actuators of the robot 1. In said light, therefore, the tube 17 shall develop along the frame of the robot 1 together with a bundle of other cables and pipes.

According to the invention, the signal cable 16 is inserted into the shielding and guiding tube 17 with possible motion with respect to the latter.

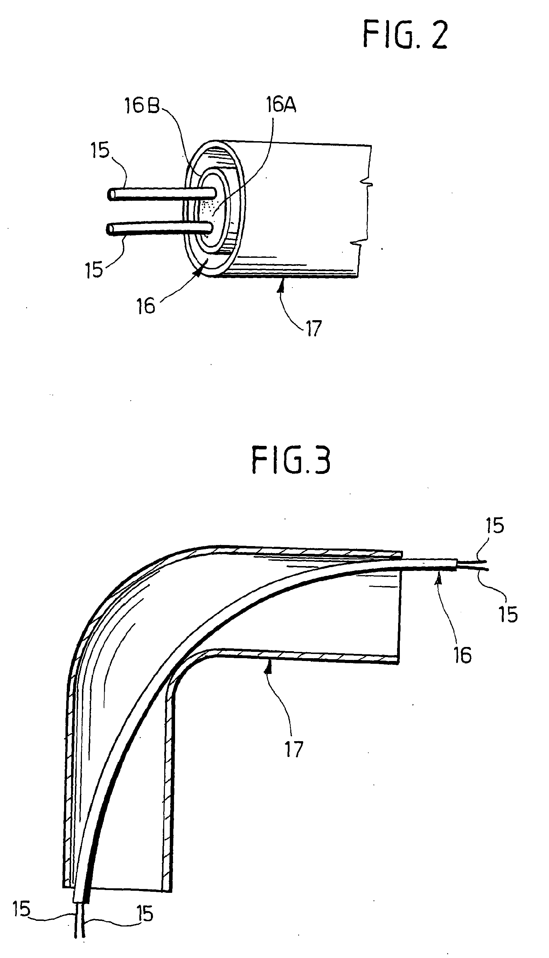

In the embodiment shown, and as can be inferred from Figure 2, the signal cable 16 comprises an inner insulator 16A in which the two optical fiber conductors 15 are dipped; the insulator 16A is covered in its turn with an outer coating 16B. As can be inferred from Figure 2, the section of the tube 17 is considerably greater than the signal cable 16, so that the second one has a given freedom of motion within the first one. In a possible embodiment, the tube 17 can have an outer diameter of 16 mm and an inner diameter of 10 mm, whereas the signal cable can have an outer diameter of 2-6 mm, depending on the arrangement and number of optical fiber conductors 15.

The aforesaid freedom of motion enables the cable 16 to freely change its configuration and position within the tube 17 depending on the movements executed by the robot 17 on highly critical points.

For instance the angular movements of the pillar 3, of the forearm 7 and of the wrist 10 according to their respective axes 4, 9 and 11-12 result in torsions located only on the tube 17, mainly on the constraint points 20, 21, and 23, 24; the tube 17 made of synthetic material, however, can tolerate well such mechanical stress in time, as referred to above, due to the elasticity of the material it is made of. On the other hand, the aforesaid angular movements of the tool 3 do not result in torsions of the cable 16 localized on single points or areas, due to the fact that the cable can freely move within the tube 17. Thus, torsion stresses on the cable 16 can be uniformly unloaded or distributed over the length of the portion of the cable 16 which is within the tube 17. This results in a dramatic reduction of local torsions on the cable 16, and therefore on the optical fiber conductors 15.

The aforesaid distribution of torsion stresses on the conductors 15 can also be helped by applying a lubricant, grease for instance, onto the outer coating of the cable 16, or anyhow inside the tube 17.

The fact that the inner diameter of the guiding tube 17 is greater than the outer diameter of the cable 16 is further advantageous also in order to reduce flexions on the fibers 15 in bending areas. Said idea is schematically shown in Figure 3; as can be seen, although in the case shown the tube 17 makes a basically right-angle bend, the cable 16 is free to place itself with a higher, i.e. softer, bending degree, which enables to reduce bending stresses on the optical fiber conductors 15.

The properties of resistance to flattening and to excessive flexion of the tube 17 are further designed to prevent the latter from taking on too small bending radiuses, and therefore the optical fiber conductors 15 from placing themselves according to small bending radiuses. Said property is particularly useful if the tube 17 develops along the frame of the robot 1 together with other cables or pneumatic/hydraulic pipes in a common bundle. In such a case the presence of the tube 17 and its resistance to flattening prevents the latter from being "pinched" or excessively bent by other cables/pipes of said bundle, for instance due to movements of the robot 1. Conversely, if the cable 16 or single optical fibers with their coating were part of the aforesaid bundle, the conductors 15 would be subject to high mechanical stresses.

The presence of the tube 17 which the cable or cables 16 get through is further advantageous in case maintenance operations on the system for carrying signals through optical fibers are required. As a matter of fact, in case one or more signal cables 16 should be replaced, the maintenance operator should only disconnect the conductor or conductors 15 at their ends (i.e. in the area 19 and on the processing unit 14A), and then take off the concerned cable 16 from an end of the tube 17. A new cable 16 can then be fitted into the tube 17, and then the ends of its conductor 15 should be connected at points 19 and 14A. As can be inferred, said maintenance/replacement operations are made extremely simpler thanks to the presence of the tube 17 and to the fact that the signal cable or cables 16 are inserted into the tube and can freely move within the latter.

Eventually, it is obvious that the tube 17 also shields in a convenient way the cable 16 from frictions, so as to prevent surface wear and tear thereof.

Practical tests have shown that the solution according to the invention enables to achieve the aims referred to above, and in particular to increase the lifetime of optical fiber conductors also in the severest conditions in which an industrial robot is used, as well as to ensure an optimal quality of transmitted signals.

Obviously, though the basic idea of the invention remains the same, construction details and embodiments can widely vary with respect to what has been described and shown by mere way of example.

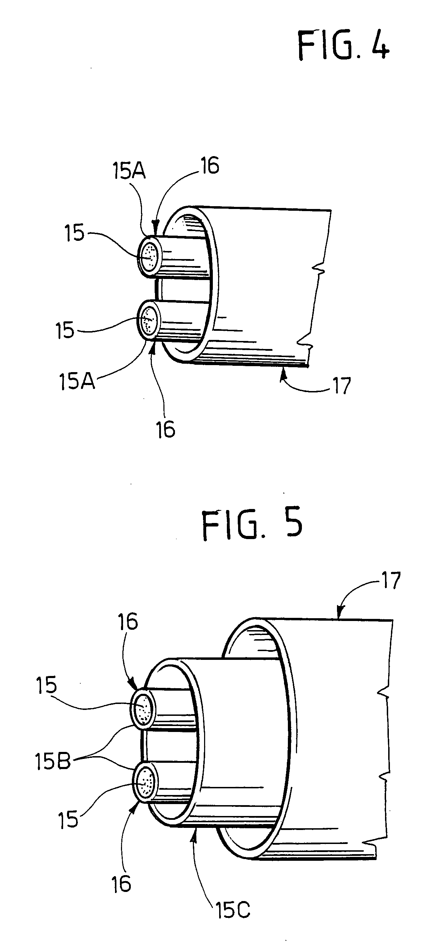

In a possible execution variant of the invention, shown in Figure 4, the conductors 15 can be covered each by its own outer coating 15A, i.e. they can be separated one from the other, so as to form two cables 16 both freely inserted into the tube 17; another possibility, shown in Figure 5, is to provide for conductors 15, each covered by its own fabric coating 15B and inserted into a common sheath 15C, for instance made of synthetic material, so as to form the cable 16 getting through the tube 17. Note that the diameter of the sheath 15C could also be far smaller than the case shown in Figure 5, i.e. such as to keep both covered conductors 15 directly close to one another.

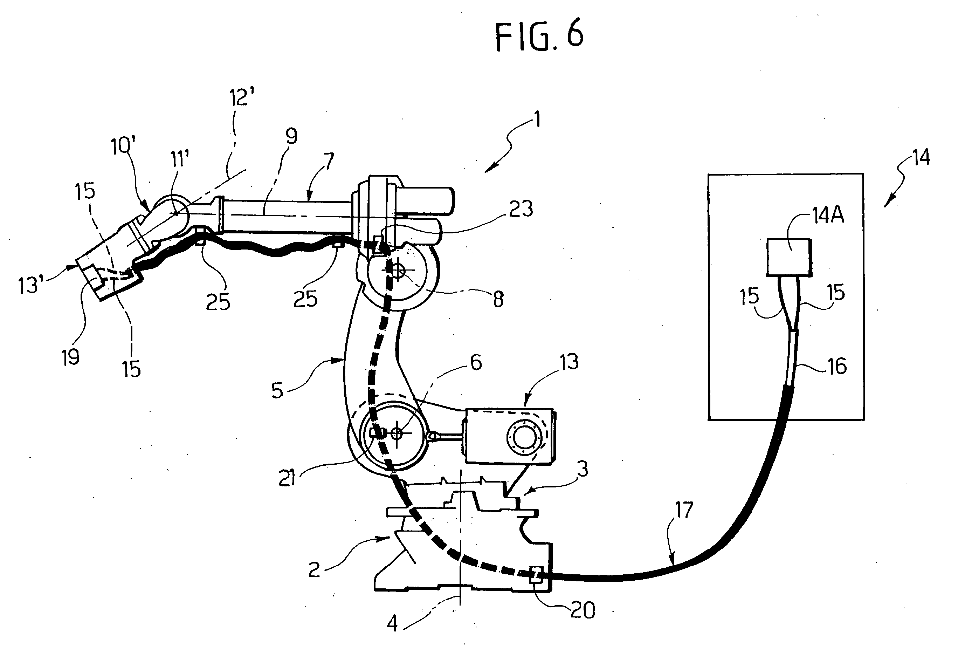

In the case previously shown in Figure 1, the portion of tube 17 extending within the robot 1 is housed almost completely within its frame (i.e. within the components 2, 3, 5, 7 and 10). In a further execution variant, a portion of the tube 17 could be arranged outside the forearm 7 and the wrist 10. Said variant is schematically shown in Figure 6, where the same numbers as in Figure 1 are used for reference. Note that in said embodiment the robot 1 is equipped with a wrist element 10' differing from the one in Figure 1, and comprising two moving parts that can turn around two corresponding axes 11', 12' perpendicular one to the other; here again the wrist element 10' is associated to a generic tool, schematically referred to with number 13'.

In the variant shown in Figure 6, the tube 17 is guided, for instance by means of core hitches, loosely along the lower portion of the forearm 7 and of the wrist 10, thus avoiding, if necessary, the need for the loop 18 as in Figure 1. Otherwise than in the case shown by way of example, the external portion of the tube 17 could develop above the forearm 7 and the wrist 10.

The tube 17 could also be arranged completely outside the frame of the robot 1, in which case the constraint means 20-25 would be fastened to the outer surface of the various components 2, 4, 5, 7, 10; also in this execution variant, the tube 17 could extend along the frame of the robot 1 together with other cables and pneumatic/hydraulic pipes.

The cable 16, which is housed almost completely inside the tube 17 at least within the frame of the robot 1, can be slightly longer than said tube, so as to avoid stretching stresses or tractions on the optical fiber conductors 15 of the existing signal cable or cables 16.

The functional device 13, 13' in signal communication with the unit 14 could differ from a tool and be for instance an actuator or a sensor element.

## Claims

1. Industrial robot (1) having a structure comprising two or more reciprocally articulated elements (2, 3, 5, 7, 10) with possible angular movement, an electronic unit (14) for controlling a functional device (13, 13') carried by the frame of the robot (1), and at least a first optical fiber conductor (15), **characterized in that** the electronic unit (14) is in signal communication with the functional device (13, 13') through the first optical fiber conductor (15) for the transmission of control signals, and that the first optical fiber conductor (15) is part of a signal cable (16) inserted into a tube (17), the outer section of the signal cable (16) having smaller dimensions than the dimensions of the inner section of the tube (17), so that the former can move within the latter.

2. Robot according to claim 1, **characterized in that** at least a portion of the tube (17) extends within the structure of the robot (1).

3. Robot according to claim 1, **characterized in that** the signal cable (16) comprises at least a second optical fiber conductor (15), the first and second conductor (15) being enclosed in a common coating (16A, 16B).

4. Robot according to claim 1, **characterized in that** the signal cable (16) is made up of the first conductor (15) and a coating of said first conductor (15A).

5. Robot according to claim 1, **characterized in that** the signal cable (16) comprises the first conductor (15) and at least a second optical fiber conductor (15), each conductor (15) having a respective coating (15B), the two conductors (15) being inserted into a common sheath (15C) extending within the tube (17).

6. Robot according to claim 3, **characterized in that** the signal cable (16) comprises an inner insulator (16A), in which at least two optical fiber conductors (15) are dipped, and an outer coating (16B).

7. Robot according to claim 1, **characterized in that** a plurality of signal cables (16) are inserted into the tube (17), each comprising an optical fiber conductor (15) and at least a respective coating (15A).

8. Robot according to claim 1, **characterized in that** the tube (17) is made of a flexible material resisting to flattening and/or compression, in particular polyurethane.

9. Robot according to claim 1, **characterized in that** said structure of the robot (1) comprises a wrist device (10; 10').

10. Robot according to claim 9, **characterized in that** said structure of the robot (1) comprises:
- a base (2) and a upright (3) mounted onto the base (2) for turning around a first axis (4) which is in vertical direction,
- an arm (5) mounted onto the upright (3) for swing around a second axis (6),
- a forearm (7) articulated to the arm (5) around a third axis (8) and capable of rotating around a respective fourth axis (9),
where the wrist device (10; 10') is supported by the forearm (7) with possibility of rotation around at least two axis (11, 12; 11', 12').

11. Robot according to claim 9 or 10, **characterized in that** the wrist element (10; 10') is a hollow wrist (10), as in claim 1 of EP-A-0 873 826.

12. Robot according to claim 11, **characterized in that** the functional device (13) is supported by the hollow wrist (10).

13. Robot according to claim 10, **characterized in that** the tube (17) extends at least partly within the base (2), the upright (3) and the arm (5).

14. Robot according to claim 13, **characterized in that** the tube (17) extends at least partly also within the forearm (7) and the wrist element (10).

15. Robot according to claim 9, **characterized in that** at least a portion of the tube (17) extends loosely outside along the forearm (7) and the wrist element (10').

16. Robot according to claim 1, **characterized in that** a main portion of the tube (17) extends outside along the structure of the robot (1).

17. Robot according to claim 1, **characterized in that** means (20-25) for guiding the tube (17) are associated to the structure of the robot (1).

18. Robot according to claim 17, **characterized in that** at least a part of the tube (17) extends along the frame of the robot (1) together with other electric cables and/or fluid pipes, so as to form a bundle guided through guiding means (20-25).

19. Robot according to claim 1, **characterized in that** the signal cable (16) is longer than the tube (17).

20. Robot according to claim 1, **characterized in that** a lubricant is present on at least one between the outer surface of the signal cable (16) and the inner surface of the tube (17).
